# EUROPEAN PATENT APPLICATION

(11) **EP 3 588 016 A2**
(43) Date of publication of application: **01.01.2020**
(21) Application number: 19020006.3
(22) Date of filing: 08.01.2019
(51) Int. Cl.: G01F 1/20, G01F 1/80

(54) **A METHOD OF MEASURING THE FLOW BASED ON THE ACTION OF A REACTION FORCE AND A REACTION FLOWMETER PERFORMED ACCORDING TO THE METHOD THEREOF**

(30) Priority: 25.06.2018 RO 457
(71) Applicant: Motit Horia Mihai, 021142 Bucuresti (RO)
(72) Inventor: Motit Horia Mihai, 021142 Bucuresti (RO)
(74) Representative: Strenc, Alexandru Cristian

(57) **Abstract**

The method of the flow measurement and the reaction flowmeter, according to the invention require the realization of two very simple specific configurations of reaction flowmeters. A first configuration is made up by association between a Reference block BR made in the form of a fixed vertical cylindrical access tube and a Sensitive block BS made either as a horizontally mobile tube curved at 90°, or as a horizontal drum, provided with two diametrically opposed tangential nozzles with opposite discharge outflows through which passes the flow of the measuring fluid. The mobile tube or the mobile drum is provided with a circular orifice in which it enters the fixed vertical circular tube, for the fluid access into the flowmeter, the orifice allowing the horizontal mobile elements to rotate freely relative to the vertical fixed tube respectively to its symmetry axis under the action of the reaction force generated at the fluid outlet, proportional to its flow rate. This mobile tube or mobile drum is referred to as the mobile reaction element, and the achieved flowmeter is referred to as the reaction flowmeter with mobile parts.

In a second configuration, called reaction flowmeters without moving parts, the Reference block BR is made up by a fixed horizontal tube and the Sensitive block ES is made up as curved quasi-immobile tube, considered as reaction elements without moving parts. At the output of the Sensitive Block, it is obtained as an intermediate parameter, in the case of the flowmeter with moving parts, either the pushing forces causes by the angular displacement or the rotation frequency of the mobile tube or drum, and in the case of the flowmeter without moving parts, either a torque or a differential pressure drop, as the case may be, parameters which are then processed in the secondary element ES containing at the inlet a force sensor or a proximity sensor for the reaction flowmeters with moving parts, or o moment sensor or a differential pressure sensor, as the case may be, for the reaction flowmeters without moving parts. The related electrical signals are entered into the Electronic block for processing, calculation and rendering of the measured flow rate.

## Description

### Technical Field

The subject matter of this invention is defining and applying a new method of measuring the flow by using the action of a reaction force generated in the fluidic circuit of a new type of flowmeter, correspondingly referred to as reaction flowmeter, which due to the simplicity of the flow path configuration may be used in the measurement of fluid flows, low pressure drops on the flowmeter.

### Background Art

The state of the art indicates known flowmeters based on flow measurement using moving parts, for example turbine flowmeters, Woltman flowmeters, ball flowmeters, which have the disadvantage that the functional displacement of these parts often requires significant energy consumption on the fluid side, and their displacement leads to a premature diminishing of the accuracy and sensitivity of measuring the flow, respectively the lifetime of the flowmeters, thus increasing the cost of maintenance implicitly.

Are also known flowmeters for flow measurement without moving parts, such as electromagnetic flowmeters, ultrasonic flowmeters, Coriolis flowmeters, thermal flowmeters, in which flow measurement uses physical principles and phenomena involving the construction of electrical devices connected to the tube flow, which provides the application by addition of external energy to the fluid by various parameters, namely: magnetic field, exciting force of the fluid flow tube, causing the tube to vibrate with the resonance frequency, thermal energy. They cause, by fluid flow, the generation of phenomena characterized by specific parameters, i.e. induced electric motor voltage, ultrasound frequency /transit time, Coriolis force, thermal energy or temperature, which values are proportional to the flow rate, so that by measuring these parameters it ensures the flow measurement.

Disadvantages of these measurement solutions and the flowmeters made on their basis consists in the complexity and the costs due to the realization of the related devices, respectively the electric energy consumption.

Within the same group of flowmeters are also known, for example, orifice plate / nozzle /Venturi tube flowmeters, Vortex flowmeters, target flowmeters, which provide for the insertion of a fluidic resistance in the fluid flow tube, thus putting into evidence physical parameters with functional role (i.e.: pressure drop on the obstacle, the frequency of the produced vortices (vortex shedding frequency) the pushing force of the fluid on a target disk) which values, being proportional to the flow rate, allow by their measuring, the measurement of the flow rate. These solutions have the disadvantages of using complex principles and configurations and introducing important pressure drops, and thus the need for functional consuming, respectively extraction of a large amount of energy from the fluid.

### Summary of invention

The technical problem solved by the present invention consists in reducing the pressure drops introduced by the related flow rate measuring devices by means of a flowmeter having a simplified configuration of the fluidic circuit and a reduced complexity of the flowmeter as a whole, by increasing measurement sensitivity and significant cost reduction and maintenance.

The flow measurement method according to the invention is based on the action of a reaction force generated at the outlet of the fluidic circuit (i.e., a horizontal mobile tube or horizontal mobile drum), having the role to discharge the fluid which flow is measured, elements which are in a free rotation movement relatively to a fixed vertical cylindrical access tube of the fluid therein. The reaction force thus obtained is proportional to the measured flow rate and appropriately transformed, either as an angular displacement or as a rotational frequency of the mobile element, rendering by electronic processing the value of the measured flow rate.

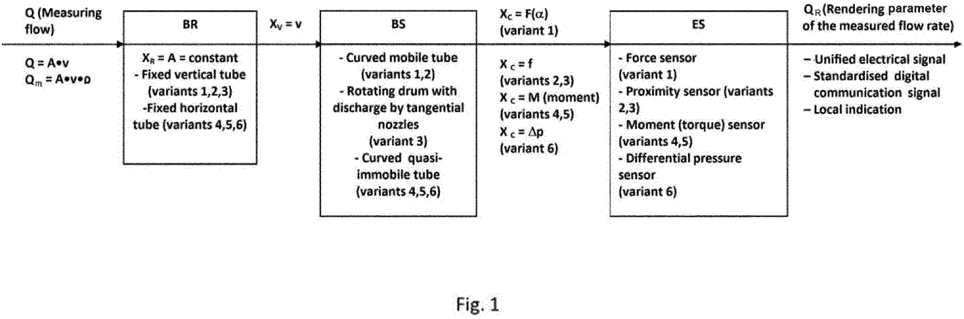

The reaction flowmeter achieved on the said method, according to the invention, in first specific configuration-Fig. 1- is made by the association between a reference block BR, made in the form of a vertical cylindrical access tube and a sensitive block BS, made either as a horizontally movable horizontal tube bent at 90° or a movable horizontal drum provided with two nozzles placed tangentially and diametrically opposed, with opposite outflows of the measuring flow. The mobile tube or the mobile drum are provided with a circular orifice in which enters the fixed vertical circular tube for the access of the fluid flow into the flowmeter. Dimensionally, the orifice allows the horizontal mobile tube or the mobile drum to rotate freely relative to the mobile horizontal tube or of the mobile drum related to the fixed vertical tube, respectively to its symmetry axis under the action of the reaction force generated at the outlet of the tube or drum, proportional to the flow rate value. According to the invention, this mobile tube or mobile drum, as the case may be, is referred to as the mobile reaction element, and the flowmeter made according to the method is called the reaction flowmeter with moving parts.

At the output of the Sensitive Block, is obtained either the force due to the angular displacement or the rotating frequency of the mobile tube or drum, parameters which are processed in the Secondary element ES containing at its inlet either a force sensor, in the case of angular displacement or a proximity sensor for frequency measurement, in the case of a rotational movement. The electrical signals related to the parameters thus measured, are further entered in the related Electronic block for processing, computing and rendering the value of the measured flow rate.

In the case of the reaction tube, the rotational moment determined by the reaction force is taken without contact by the magnetic coupling between a vertical magnet inserted into the closed end of the reaction tube, correspondingly placed inside the flowmeter drum and a circular magnet placed outside the vat on its cover.

For a complete browsing of the flow measurement range of each flowmeter, the solution requires the progressive rotation of the mobile reaction tube.

Correspondingly to each value of the flow rates, and consequently to the associated reaction force determined by it, the mobile tube will rotate until the angular position is reached, for which the moment of the reaction force is balanced by the moment of attraction force between the two magnets of the magnetic coupling.

Browsing the measuring range (Qₘᵢₙ .... Qₘₐₓ) of each flowmeter involves the rotation of the mobile tube relative to the reference position (characterized by the angular displacement α = 0° corresponding to the flow rate Q = 0), initially with the angle αₘᵢₙ (for the Qₘᵢₙ flow rate) and containing up to the αₘₐₓ angle, for the Qmax flow rate. The angular displacement of the reaction tube causes the rotation, at an appropriate angle, of the outer circular magnet, and implicitly of the shaft on which it is rigidly fixed, with the corresponding angle of the pointer fixed perpendicularly to the shaft.

The pointer is in a permanent contact with a force sensor which it presses with a progressively increasing force, implicitly with the increase of the measured flow rate. By calibrating the flowmeter, for its measuring range, it is determined the correspondence between the pushing force values of the pointer on the force sensor measured by it and the measured flow rate values.

In order to browse the entire flow rate measurement range, the constructive solution can also be assured by a progressive increase of the rotation frequency of the mobile tube. The rotation of the mobile tube under the reaction force takes place with respect to the vertical axis of the fixed tube starting from a minimum frequency fₘᵢₙ corresponding to the minimum Qₘᵢₙ flow rate and continuing to a maximum value fₘₐₓ corresponding to the maximum Qₘₐₓ flow rate.

Due to the fact that the reaction tube rotates freely from the fixed vertical tube and its reference axis, the reaction force causes the reaction tube to rotate with a frequency proportional with the flow rate. By measuring the frequency and rotational speed of the reaction tube, the flow measurement is provided.

Basically similar to previous solution, the horizontal mobile tube is replaced by a horizontal mobile drum, provided with two diametrically opposite nozzles, tangent to the outer contour of the drum and with opposite discharge outlets of the fluid.

### Brief description of drawings

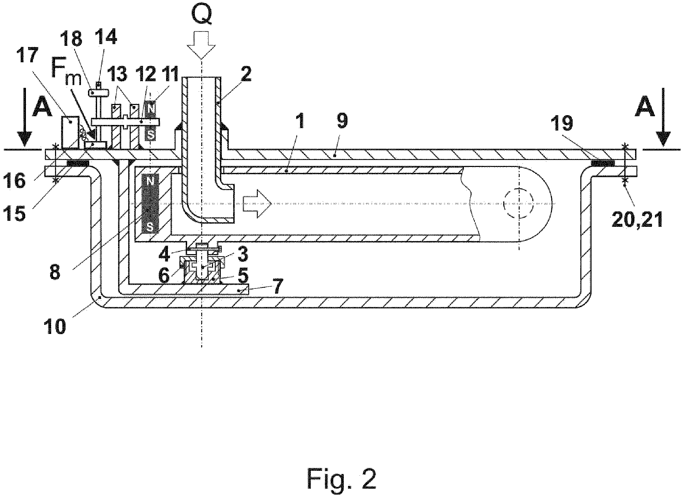

Further are presented several embodiments of reaction flowmeters with moving parts, with reference also to Fig 2..8 which represent:
- Fig. 2 -longitudinal section through the flowmeter with the angular displacement of the tube;

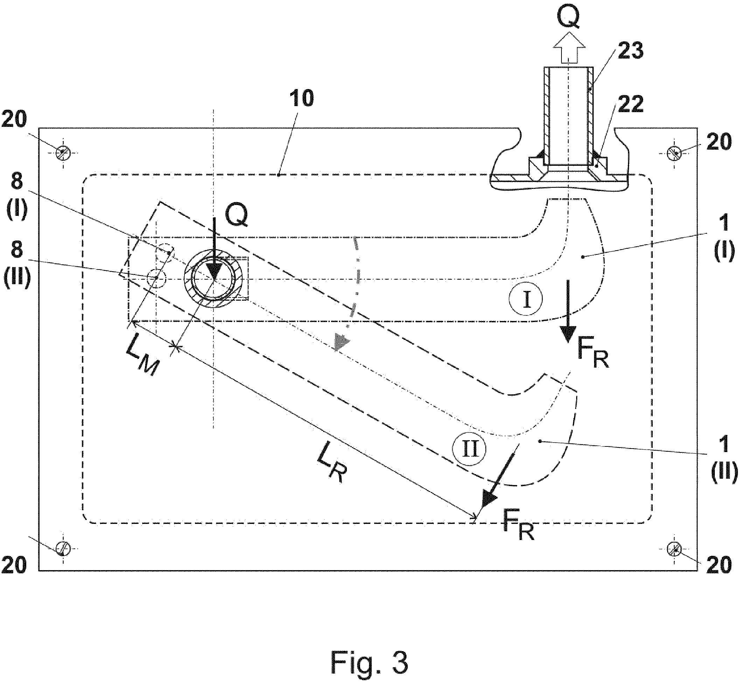

- Fig. 3 -cross section with a plane A-A of the flowmeter in Fig. 2;

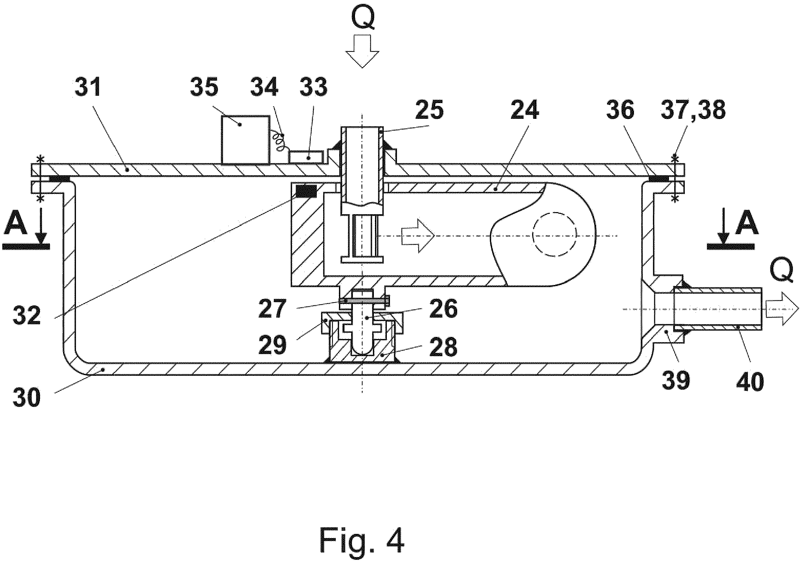

- Fig. 4 - longitudinal section through the reaction flowmeter with tube rotation;

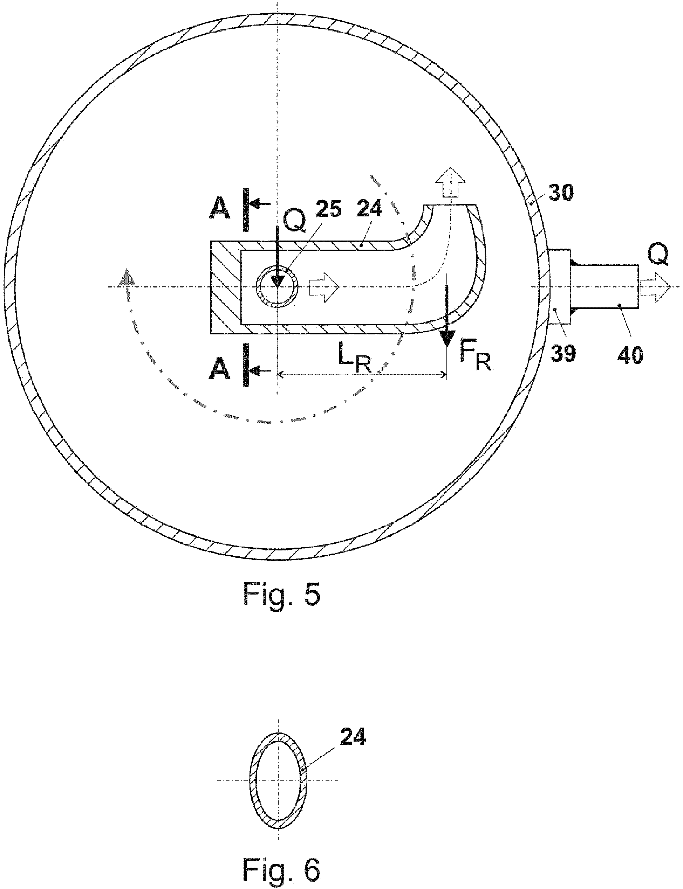

- Fig. 5 - cross section with a plane A-A of the flowmeter in Fig. 4;
- Fig. 6 -cross section with a plane A-A of the flowmeter in Fig. 5;

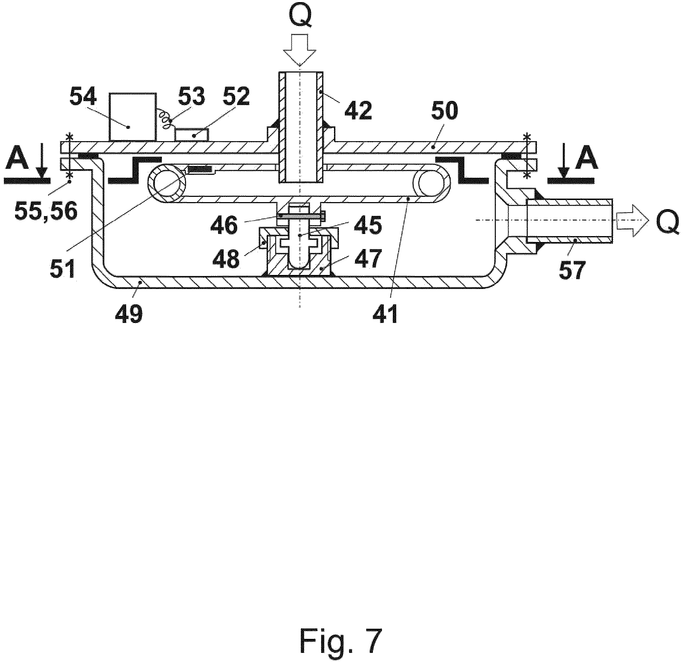

- Fig. 7 - longitudinal section through the reaction flowmeter with drum rotation;
- Fig. 8 - cross section with a plane A-A of the flowmeter in Fig. 7.

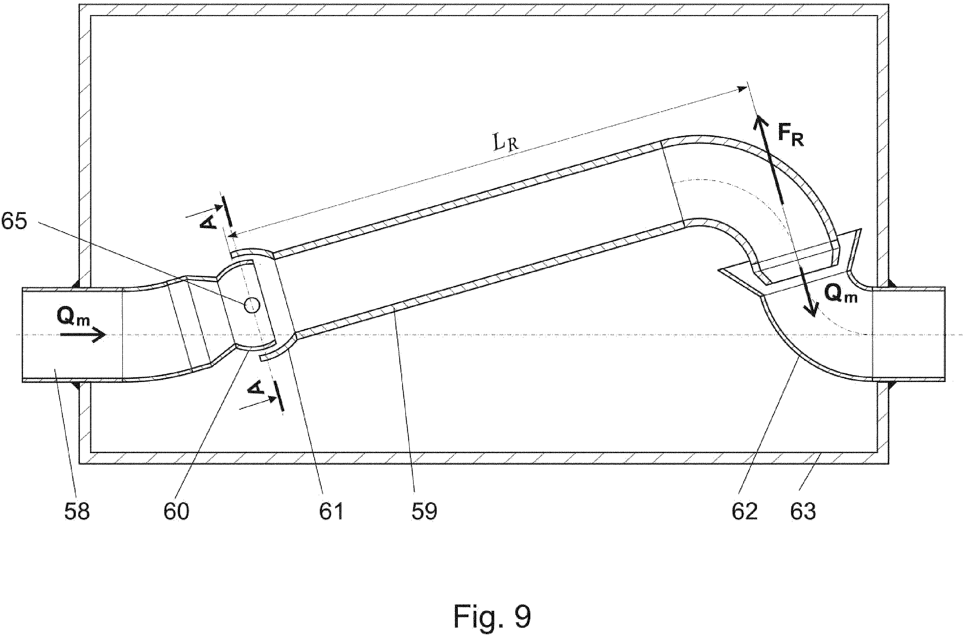

Further are provided examples of embodiments the reaction flowmeter without moving parts, in connection also with Figures 9-15 which are representing:
Fig. 9 - longitudinal section through the reaction flowmeter with direct flow measurement, within the fluid, of the reaction torque;

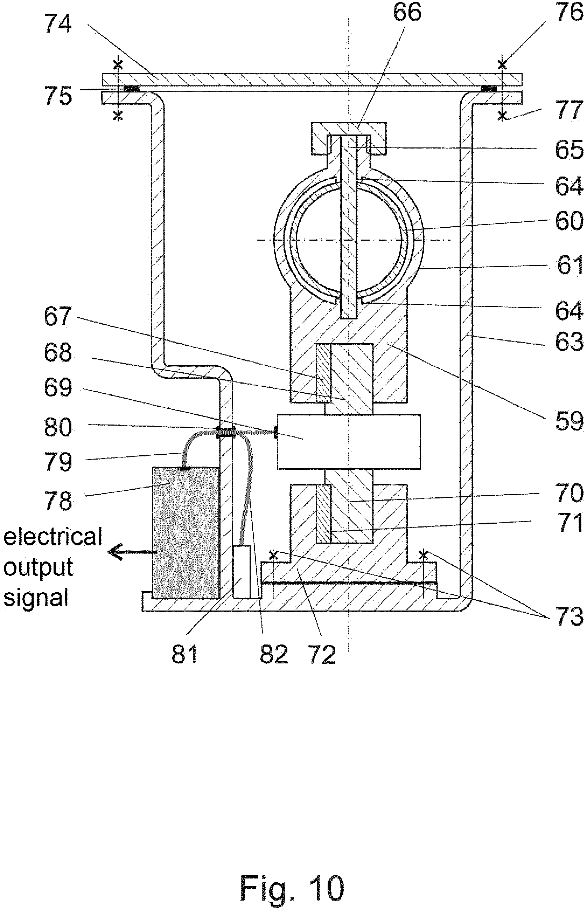

Fig. 10 -section with a plane A-A of the flowmeter in Fig. 9;

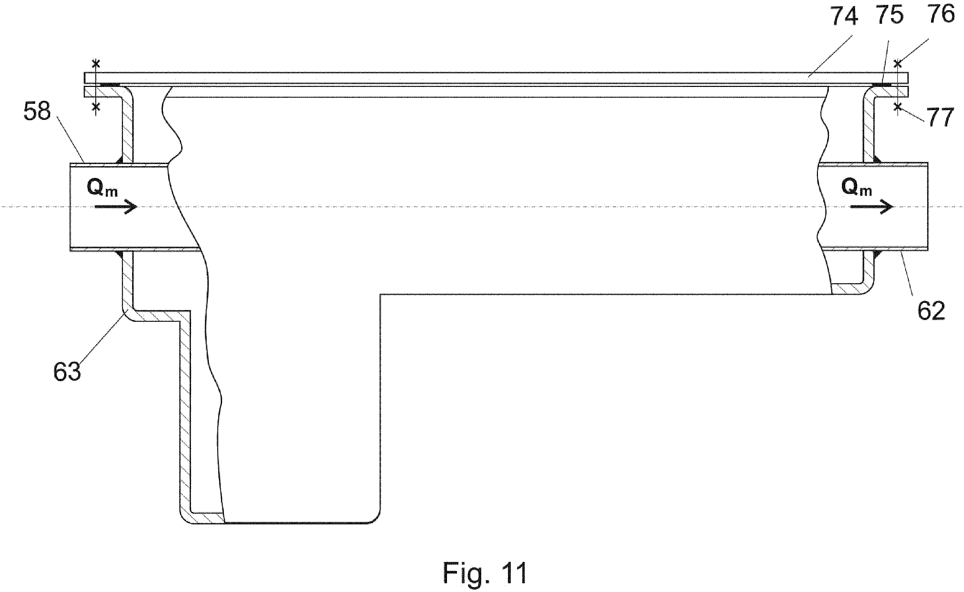

Fig. 11 -side view of the flowmeter of Fig. 9;

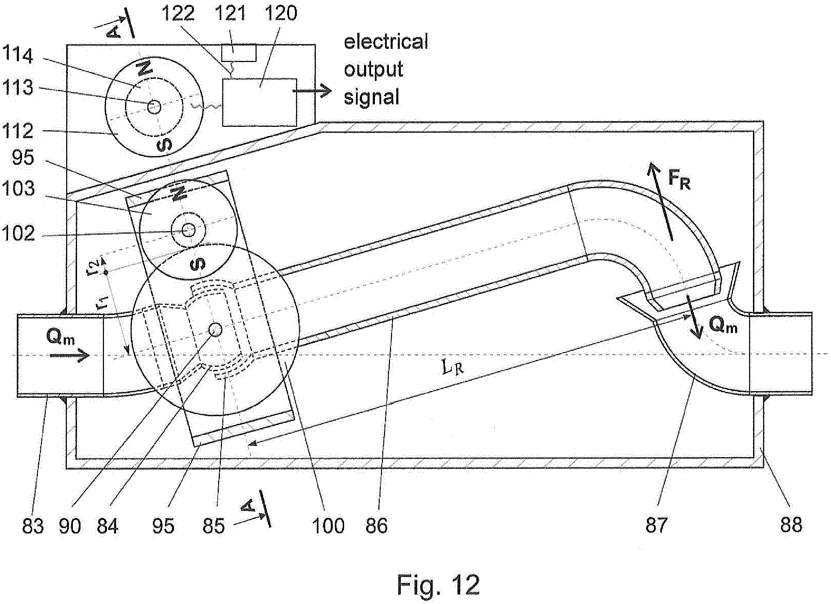

Fig. 12 - longitudinal section through the reaction flowmeter with taking over by magnetic coupling and measurement of the reaction torque outside the fluid;

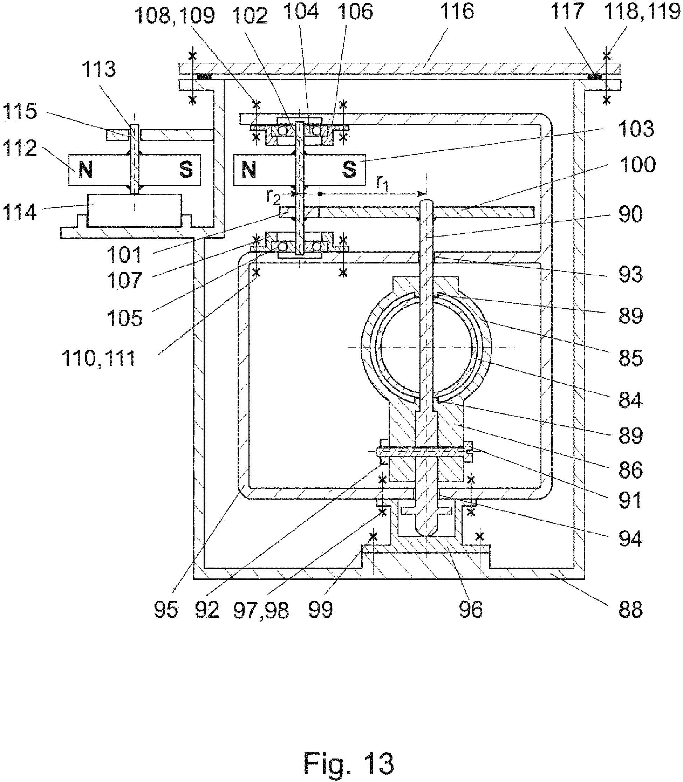

Fig. 13 -section with a plane A-A of the flowmeter in Fig. 12;

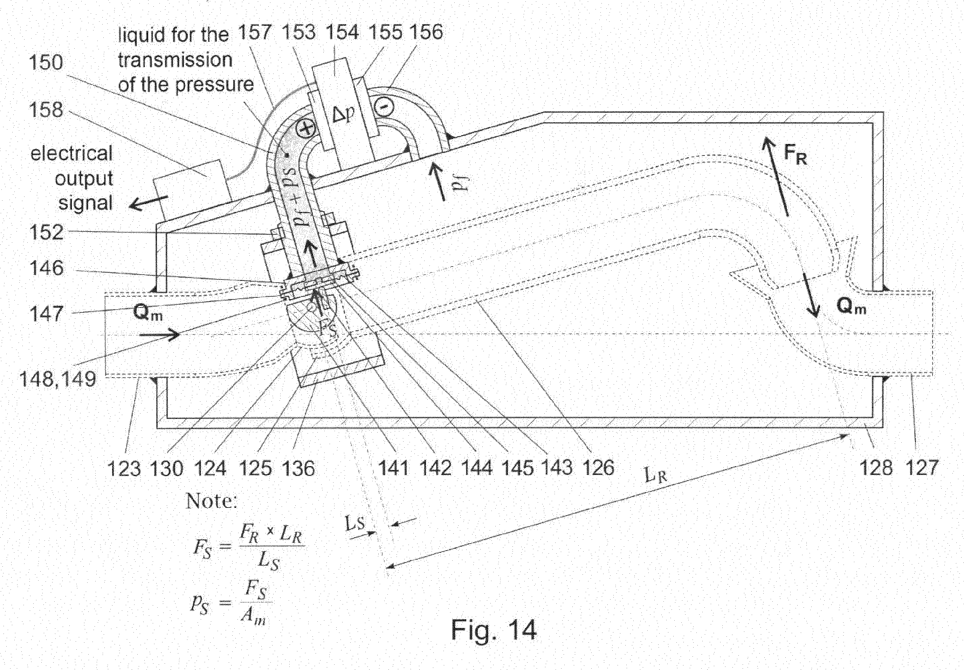

Fig. 14 -longitudinal section through the reaction flowmeter with the measurement of the reaction force, by differential measurement of the pushing (reaction) pressure;

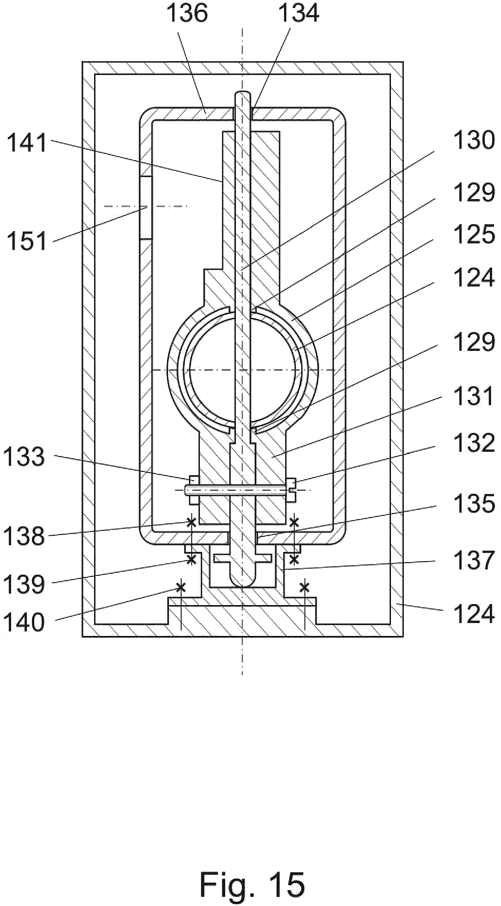

Fig. 15 -section with a plane A-A of the flowmeter in Fig. 14.

### Description of embodiments

The reaction flowmeter with moving parts according to the invention, in a first embodiment, consists of a mobile horizontal tube 1 in which freely enters a fixed vertical tube 2.

The tube 1 is closed at one end and open at the other end, which is bent at 90°, ending in the form of a convergent nozzle. Near its closed end, at its upper side, the tube 1 has a circular orifice with a slightly larger diameter than the outer one of the tube 2, a diameter which allows it to rotate freely in the horizontal plane, related to the fixed vertical tube 2. Jointly with tube 1, is a shaft 3, from which it is rigidly fixed by a screw 4. The shaft 3 rests on a bush 5, both its vertical and horizontal displacement being minimized, by completely screwing a nut 6 into bush 5. The constructive achievement of minimum horizontal and vertical displacements as well as of minimum friction between the shaft 26 and the bush 28 and the nut 29 determines the rigorousity of the rotation of the tube 24 relative to the axis of symmetry of the vertical fixed tube 25, the sensitivity of the flow measurement and the reliability of the flowmeter. The bush 5 is rigidly fixed by welding or durable bonding, to a support 7. A vertical magnet 8 is embedded in the wall that closes the tube 1. The holder 7 is rigidly secured by a cover 9 of the flowmeter.

A fixed vertical tube 2 is fixed and tight mounted on the cover 9, which freely enters the horizontal tube 1 by the circular hole at the top thereof, allowing the tube 1 to rotate freely related it.

The tube 2 is bent at its end at a very small portion at 90° to ensure the targeting of the fluid jet along the tube 1 and the avoidance of any swirls. The fluid exits the tube 1 through the nozzle at its open end causing the F_{R} reaction force of the tube 1, proportional to the measured flow rate Q, and perpendicular to the long arm of the tube 1 and of an opposite targeting to the outlet of the fluid flow.

The reaction force F_{R} acts on the tube 1, determining the reaction moment M_{R} = F_{R} x L_{R}, where L_{R} is the arm of the force F_{R}.

On the other hand, on the tube 1 acts the moment of magnetic resistance of the attraction force F_{M}, between a vertical magnet 8 inserted into the tube 1 in a vat 10 of the flowmeter and an annular magnet 11 outside the vat 10, corresponding to the pushing force on the force sensor. The arm of the force F_{M} is L_{M}.

For each value of the flow rate Q, within the measuring interval (Qₘᵢₙ .... Qₘₐₓ) of the flowmeter, the tube 1 rotates around its axis of rotation, located on the vertical axis of symmetry of the fixed vertical tube 2 and the shaft 3, with the angle corresponding to the position where the two antagonistic moments are equal, respectively F_{R} x L_{R} = F_{M} x L_{M} and balance each other.

The angular displacement in horizontal plan, of the vertical magnet 8 determines the corresponding rotation of the annular magnet 11, which is rigidly mounted on a shaft 12, thereby implicitly rotating with the same angle.

The shaft 12 rotates in two bearings 13 and causes the same angle of rotation of a pointer 14, joint with the shaft 12, a pointer which is thus dimensioned to be permanently in contact with a force sensor 15. By rotation, the pointer pushes the force sensor 15 with a force Fm, depending on the direction of its rotation. The force Fm is proportional to the moment of the reaction force.

The force sensor 15 generates an electrical signal proportional to the measured force Fm, a signal transmitted through a cable 16 to an electronic block 17.

In an electronic block 17 it is previously stored, following experimental calibration on the stand of the flowmeter, its specific correspondence Fm = Fm (Q) of the force measured by the force sensor 15 and the flow rate Q. For fine adjustment of the rigorous return of the tube 1 to its reference angular position, when the flow rate Q is null, a counterweight 18 is placed on the top of the pointer 14, which is threaded, and which position can be changed as required.

Implicitly, with a smaller weight, in establishing the equilibrium between the moments of the forces acting on the tube 1, determining its equilibrium position, also intervenes the moment of the force of the counterweight 18. A cover 9 is sealed to a vat 10 by tightening a gasket 19 by means of screws 20 and nuts 21.

The discharge of fluid from the vat 10 of the reaction flowmeter is made through a nozzle 22 or an outlet connection 23 fixed rigidly thereto. According to another embodiment, the reaction flowmeter is made up of a mobile horizontal tube 24 in which a freely enters a fixed vertical tube 25. The tube 24 having an oval hydrodynamic cross-section, relative to the direction of rotation is closed at one end and open at the other end, which is bent at 90°, ending in the form of a convergent nozzle. Near its closed end, at its upper side, the tube 24 has a circular orifice having a diameter slightly larger than that the outside one of the tube 25, which allows it to rotate freely in the horizontal plane, relatively to the fixed vertical tube 25.

Jointly with tube 24 is a shaft 26 from which it is rigidly secured by a screw 27. The shaft 26 rests on a bush 28, its vertical play as well as the horizontal play being limited to the minimum by fully screwing a nut 29 in bush 28.

The constructive providing of the minimum horizontal and vertical plays and the minimum friction between the shaft 26 and the bush 28 and the nut 29, determines the rigorous rotation of the tube 24 relative to the axis of symmetry of the vertical fixed tube 25, the sensitivity of the flow measurement and the reliability of the flowmeter.

The bush 28 is rigidly fixed to a vat 30 so that the axis of symmetry of the tube be coaxial with the axis of symmetry of the vertical tube 25. The fixed vertical tube 25 is mounted rigidly and sealed on a cover 31 and then inserted into the movable mobile tube 24 centrally through its orifice provided for this purpose, ensuring the free rotation of the tube 24 relative to the fixed tube 25.

The fixed tube 25 is provided at its outlet with wide sided exit slots for guiding of the fluid along the mobile tube 24, thereby avoiding the impact in a vertical plane of the fluid with it.

The fluid exits the tube 24 through the convergent nozzle at from its end, causing the F_{R} reaction force of the tube 24, force proportional to the measured flow rate Q flow rate measured and perpendicular to the long arm of the tube 24 and opposite to the fluid outlet direction.

The reaction force acts on the tube 24, determining the reaction moment respectively of rotation of the mobile tube 24, according to the relation M_{R} = F_{R} x L_{R}, where L_{R} is the F_{R} arm.

At the closed end of the mobile tube 24, is a magnet 32, is inserted.

On the cover 31 is located a proximity sensor 33 having the function of an electrical contact, of Hall type, Reed type, etc., cantered on the same vertical axis as the magnet 32.

When the magnet 32 approaches the sensor 33 by rotating the tube 24, it commands the closing of its associated electrical contact, information then transmitted by electric cable 34 to an electronic block 35.

Since at each complete rotation of the tube 24 the electronic block 35 receives an electrical impulse corresponding to a closing of the electrical contact of the sensor 33, the electronic block 35 determines the frequency of these pulses, implicitly the rotating speed of the mobile tube 24. On the other hand, the rotating speed of the mobile tube is proportional to the F_{R} reaction force that causes the tube 24 to rotate, the force which in its turn is proportional to the measured flow rate Q.

It results that the rotational speed of the mobile tube 24 is proportional to the measured flow rate Q, and consequently the frequency determined by the electronic block 35, for the pulses received from the sensor 33, is proportional to the measured flow rate Q.

In the electronic block 35 is previously stored, following experimental calibration on the checking installation of the flowmeter, its specific correspondence f = f (Q) between the frequency of the electrical impulses, respectively the rotational speed of the tube 24 and the measured flow rate Q.

The cover 31 is sealed to a vat 30 by tightening a gasket 36 by means of screws 37 and nuts 38.

The discharge of fluid from the vat 30 of the flowmeter is made through a nozzle 39 or an outlet connection 40, respectively. The reaction flowmeter according to a third embodiment consists of a mobile horizontal drum 41 in which a circular fixed vertical tube 42 freely enters through a circular hole centrally located at the upper side of the drum 41.

This hole has a diameter larger than the outer diameter of the fixed vertical tube 42, allowing the horizontal free rotation of the drum 41 relative to a fixed vertical pipe 42.

The mobile horizontal drum 41 is provided with two nozzles 43 and 44 disposed diametrically opposed and tangentially to its outer contour through which, the fluid introduced into the drum 41 through the fixed vertical tube 42 is discharged into the two opposite flow directions. Jointly with drum 41 is a shaft 45, from which it is rigidly secured by a screw 46.

The shaft 45 rests on a bush 47, its vertical and horizontal play being limited to a minimum by the complete screwing of a nut 6 into the bush 5. The ensuring of the constructive minimal horizontal and vertical motion, as well as the minimum friction between the shaft 45 and the bush 47 and the nut 48, determines the rigorous rotation of the drum 41 relative to the symmetry axis of the fixed vertical tube 42, the flow measurement sensitivity and the flowmeter reliability.

The bush 47 is rigidly fixed to a vat 49 such that its axis of symmetry is coaxial with the axis of symmetry of the fixed vertical tube 42. The fixed vertical tube 42 is rigidly and tightly mounted on a cap 50 and then inserted into the drum 41 through the central orifice at the top thereof, ensuring free rotation of the drum 41 relative to the fixed vertical pipe 42. The fluid exiting the vertical tube 42 and entering the drum 41 exits through the two nozzles 43 and 44, causing the action of the two opposing reaction forces F_{R1} and F_{R2}.

Each of the two reaction forces determines their own reaction moment, these summing up the effects of rotating the drum 41, according to the relationship F_{R1} x L_{R} + F_{R2} x L_{R} = L_{R} x (F_{R1} + F_{R2}) where L_{R} has a value slightly smaller than the radius of the circular drum 41.

Inserted into the top wall of the drum 41 is a magnet 51.

On the cover 50 and on the same vertical axis as the magnet 51, is placed a proximity sensor of a Hall type, Reed type, etc., having the function of an electrical contact 52.

When, by rotating the drum 41, the magnet 51 reaches the sensor 52, it commands the closing of its electrical contact, information transmitted by electrical cable 53 to an electronic block 54. Since at each complete rotation of the drum 41 the electronic block 54 receives an electrical impulse corresponding to a closing of the electrical contact of the sensor 52, the electronic block 54 determines the frequency of these pulses, implicitly the rotational speed of the mobile drum 41.

On the other hand, the rotation speed of the mobile drum 41 is proportional to the sum of the moments of the two reaction forces F_{R1} and F_{R2} which cause the drum 41 to rotate, these forces being in their turn proportional to the measured flow rate Q.

As a result, the rotational speed of the mobile drum 41 is proportional to the measured flow rate Q, and consequently the frequency determined by the electronic block 54 for the impulses received from the sensor 52 is proportional to the measured flow rate Q.

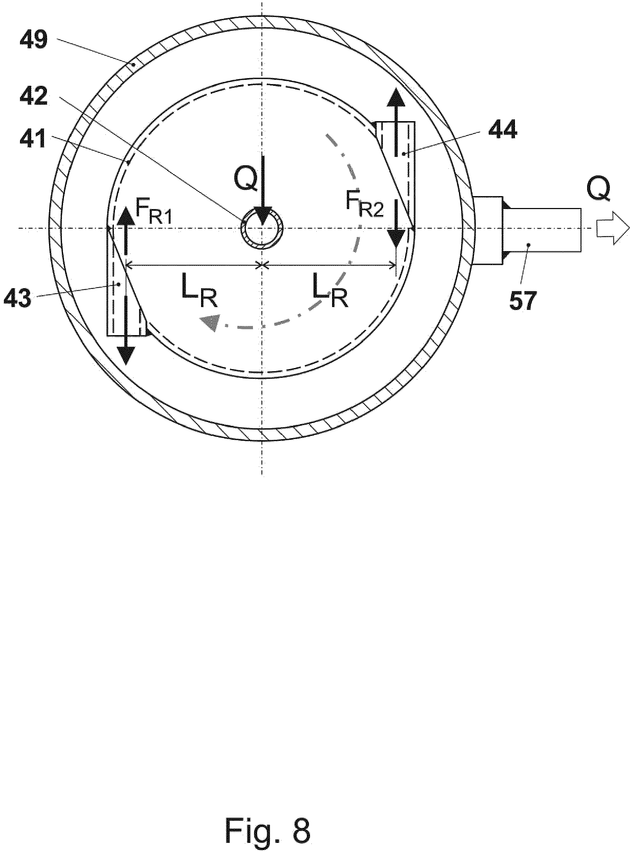

In the electronic block 54 is previously stored, following experimental calibration on the checking installation of the flowmeter, its specific correspondence f = f (Q) between the frequency of the electrical impulses (i.e. rotation speed of the drum 41) and the measured flow rate Q. The cover 50 is sealed to the vat 49 by tightening a gasket 51 by means of screws 55 and nuts 56. The fluid discharge from the reaction flowmeter vat 49 is made through an outlet connection 57. The reaction drum 41 may be made not only by two nozzles according to the configuration shown in Fig. 8, but also by three nozzles tangential to its outer contour, arranged at equal angles of 120°, or by four tangential nozzles arranged at angular distances of 90°.

All reaction flowmeters, implicitly those with moving parts presented above, measure the mass flow rate Qm.

The present invention also contemplates reaction flowmeters without moving parts.

Reaction flowmeters of this type are considered without moving parts as they functionally involve an angular displacement of the reaction tube practically insignificant of only 0.2° ... 0.6°.

These flowmeters also have the common constructive feature that the inlet and outlet connections are collinear.

The reaction flowmeter without moving parts, realized in implementing the method according to the invention, is made up in this second configuration, as shown in Fig. 1, from the association of a reference block BR made in the form of a horizontal fixed access tube, a sensitive BS block made as a curved quasi-immobile tube and a Sensing element ES made either as a moment (torque) sensor or as a differential pressure sensor.

This curved quasi-immobile tube is named according to the invention as an immobile reaction element, and the flowmeter made on the basis of the method in this configuration is called a reaction flowmeter without moving parts.

In this regard, a first embodiment of a flowmeter without moving parts envisages a reaction flowmeter with the direct measurement of the reaction torque, in the fluid (Figures 9...11).

The measuring fluid enters the flowmeter through an inlet connection 58 and continues to flow through a reaction tube 59, by passing through the spherical coupling made of a nozzle(bumped head) 60 belonging to the inlet connection 58 and a nozzle (bumped head) 61 of the reaction tube 59.

The fluid then flows through the reaction tube 59, which is bent at the other end by 90°, and terminates with a convergent nozzle. The fluid exiting the reaction tube 59 is taken up by an outlet connection 62 through which it is discharged from the flowmeter.

The outlet connection 62 takes the fluid through a large convergent nozzle so as not to disturb the reaction tube 59 at its very low operating rotation.

Connections 58 and 62 are fixed rigidly and tightly to the housing 63 of the flowmeter, having their symmetry axes collinear, on the same horizontal line.

The radial equidistance between the nozzle (bumped head) 60 of the inlet port 58 and the inlet nozzle (bumped head) 61 in the reaction tube 59 is constructively achieved by two bosses 64 of the bumped head 61 of the reaction tube 59.

The bosses 64 are cylindrical and are placed vertically, up and down around a vertical shaft 65 (see Fig. 9). In particular situations, the bosses 64 may be replaced by a continuous circular crown along the inner circumference of the bumped head 61

The bosses 64 have a very low height and a small outer diameter, ensuring minimisation of the contact friction between the nozzle (bumped head 60) of the inlet connection 58 and the nozzle (bumped head 61) of the reaction tube 59.

The rigorously concentric positioning of the two bumped heads 60 and 61 is accomplished by a metal shaft 65.

The bumped head 60 of the inlet connection 58 is provided with two circular holes positioned vertically, diametrically opposed, having a diameter slightly greater than that of the shaft 65, to provide minimal play therewith.

The inlet connection 58 is rigidly mounted relative to the housing 63 so that the axis of the centres of the two holes be in a perfectly vertical position.

The spherical calotte 61 of the reaction tube 59 is provided, at its upper side, with a circular hole having the same diameter as that of the two holes, opposed diametrically in the bumped head 60.

Diametrically opposed to this hole, the bumped head 61 is provided with a clogged hole, having the same diameter as the three holes described above.

The rigorous positioning of the reaction tube 59 with respect to the inlet connection 58 is ensured by the rigorous concentric positioning of the bumped heads 60 and 61, achieved by rigorous positioning on the same vertical line of the upper bore of the bumped head 60 with the shaft 65. In this situation the shaft 65 passes easily through both the hole and the other hole in the bumped head 60 at its lower and diametrically opposed upper hole, the shaft finally occupying the full clogged hole of the cap 61 of the reaction tube 59.

According to Fig. 10, the spatial positioning (x, y, z) between the two bumped heads 60 and 61 is thus rigorously assured. Then, by threading a nut 66 on the upper outer boss of the reaction tube 59, is ensured a permanent locking of the shaft 65 in this position.

By means of a wedge 67, the measuring shaft 68 of the torque transducer 69 being rigidly blocked relative to the reaction tube 59, respectively to its outer boss with which it is provided also at its lower side, fully takes over the torque of the tube 59.

Correct measurement of this torque is ensured by blocking the rotation of a torque transducer 69 by locking its support shaft 70 relative to the housing 63 of the flowmeter, with a wedge 71 positioned between it and the support 72 which in its turn is rigidly fixed to the housing 63 by means of some screws 73.

The housing 63 of the flowmeter is closed by a cover 74 which ensures the tightness of the flowmeter by tightening a gasket 75 with some screws 76 in the nuts 77.

Functionally, the reaction force F_{R} developed by the mass flow Qm at the outlet of the reaction tube, determines the torque (moment) M_{R} = F_{R} x L_{R} which in its turn renders the variation of Qm.

This rotation torque (moment) is taken up by the measuring shaft 68 and implicitly by the torque transducer 69 which output signal, proportional to the measured mass flow, is taken over by an electronic block 78 via a cable 79 which is passed via housing 63 through a preset 80.

Although the influence of the temperature on the output signal of the torque sensor is very small (0.01 ... 0.015% FS/°C), is also provided a temperature sensor 81 to ensure a very high flow measurement accuracy whose output signal is transmitted by a cable 82 to the electronic block 78 to provide for the temperature compensation of the torque sensor output signal.

The torque transducer is immersed in the measuring fluid, its output signal being implicitly compensated by the temperature of the measuring fluid as measured by a sensor 81.

In the electronic block 78 it is previously stored, following experimental calibration on the checking installation of the flowmeter, its specific correspondence M = M (Qm) between the torque measured by the transducer 69 and the mass flow Qm passed accordingly through the flowmeter. Thus, the output signal from the electronic block 78 renders the mass flow rate Qm.

Because to the measuring shaft 68 of the torque transducer 69 it is required a very low torsion angle of 0.2° ... 0.6° to measure its maximum (nominal) torque and, implicitly, the reaction tube, which is rigid with the measuring shaft 68, will have the same insignificant angle of rotation for the entire flow measurement range (Qminimum ....... Qmaximum).

Consequently, since functionally the working (rotation) angle of the reaction tube is practically insignificant, this type of reaction flowmeter is basically considered to be a flowmeter without moving parts.

Another embodiment of a reaction flowmeter without moving parts, is that with magnetic coupling and measurement of the reaction torque outside the fluid (Figure 12, 13).

The measuring fluid enters the flowmeter through an inlet connection 83 ending with a nozzle (bumped head) 84 that enters into a nozzle (bumped head) 85 of a reaction tube 86.

The fluid then flows through the reaction tube 86, which is bent at the other end at 90° and ends with a convergent nozzle.

The fluid exiting the reaction tube is taken up by an outlet connection 87 through which it is discharged from the flowmeter.

Outlet connection 87 is provided at its inlet with a large convergent nozzle for taking over the fluid exiting the reaction tube 86, a nozzle made in such a way that it does not disturb the reaction tube 86 at its very small rotation, above mentioned.

Connections 83 and 87 are fixed rigidly and tightly to a housing 88 of the flowmeter, having the symmetry axes on the same horizontal line.

The radial equidistance between the nozzle (bumped head) 84 of the inlet connection 83 and the nozzle (bumped head) 85 of the reaction tube 86 is achieved constructively by two bosses 89, related to the bumped head 85 of the reaction tube 86.

The bosses 89 are cylindrical and are located vertically, up and down, around the vertical shaft 90.

For particular situations, the bosses 89 may be replaced by a continuous circular crown along the inner circumference of the bumped head 85.

The bosses 89 having a very small height and a small outer diameter ensure minimization of the contact friction between the inlet connection 83 and the reaction tube 86.

Rigorous positioning of the reaction tube 86 relative to the inlet connection 83 is ensured by rigorously concentric positioning of the bumped heads 84 and 85 made by a vertical shaft 90.

The shaft 90 passes both through the two positioning circular holes with which the bumped head 85 of the reaction tube 86 is provided, the holes being disposed diametrically opposed in the vertical plane and through the two positioning circular holes with which the bumped head 84 of the inlet port 83 is provided 84, the holes being diametrically opposed to the same vertical plane.

The execution tolerances of the diameters of the two positioning holes of the bumped head 84 provide minimal plays between that and the vertical shaft 90.

In its turn, the vertical shaft 90 is stiffened with respect to the reaction tube 86 and the bumped head 85 thereof by a locking system screw 91-nut 92.

The rigorous positioning of the shaft 90, in both horizontal and vertical plane, is accomplished by providing two holes (bearings) 93 and 94 for its passing through the upper and lower walls of a support 95 of the reaction tube 86.

The centers of the two holes (bearings) 93 and 94 are rigorously placed on the same vertical axis, and thus constructively are ensured both minimum horizontal play and minimum friction for the shaft 90.

The shaft 90 rests on a collar flange 96 which is stiffened both with respect to the support 95 by a screw 97-nut 98 system and to a housing 88 of the flowmeter by means of screws 99.

On the upper side of the shaft 90 it is rigidly placed a wheel (or only a circular sector with very small angular opening) 100, with the role of the driving wheel, having a large diameter, which is coupled by friction (or by a fine toothed gear) with a wheel 101, with the role of driven wheel and having a smaller diameter.

Thus, it is provided a transmission ratio that ensures a corresponding multiplication of the rotation angle of the driven wheel 101 with respect to the very small rotation angle of the driving wheel 100.

On a shaft 102 of the driven wheel 101 is rigidly placed a circular magnet 103, diametrically polarized. The shaft 102 can rotate relative to the support 95 and is rigidly fixed to the movable parts of some bearings 104 and 105. These bearings are fixed to the support 95 by tightening the parts 106 and 107 with some screws 108-nut 109 and respectively screw 100 - nut 111 systems.

A magnet 103 that is immersed in the measuring fluid reproduces the rotation of the wheel 101 and by magnetic coupling causes the rotation of a magnet 112 which is located outside the housing 88 of the flowmeter.

The outer magnet 112 is diametrically polarized as well as the inner magnet 103.

The magnet 112 is rigidly secured to a metering shaft 113 of a torque transducer 114, being guided and rigorously positioned vertically by a bearing 115 secured by the through hole itself, through the correspondingly profiled extension of the outer wall of the housing 88 of the flowmeter.

The housing 88 of the flowmeter is closed by a cover 116 which assures the tightness of the flowmeter by tightening a gasket 117 with a screws 118-nuts 119 system.

Functionally, the reaction force F_{R} developed by the mass flow rate Qm at the exit of the reaction tube 86 determines the torque (moment) M_{R} = F_{R} x L_{R} which thus renders the variation of the mass flow rate Qm.

This torque (moment) is taken over by the shaft 90, which rotation angle is amplified by the gear between the two wheels 100 and 101.

The rotation torque of the magnet 112 is measured by the torque transducer 114, as this magnet is rigidly mounted on the metering shaft 113 of the transducer 114, causing its corresponding torsion.

The output signal from the torque transducer 114 is transmitted to an electronic block 120.

Although the influence of the temperature on the output signal of the torque transducer is very small, to ensure a very high flow measurement accuracy, it is envisaged to place near the torque transducer 114, outside the housing 88, a temperature sensor 121 which output signal is transmitted to the electronic block 120 via a cable 122, thereby ensuring the temperature compensation of the output signal of the torque transducer 114.

In the electronic block 120 it is previously stored, following experimental calibration on the checking installation of the flowmeter, its specific correspondence M = M (Qm) between the torque measured by the transducer 114 and the flow rate Qm passed accordingly through the flowmeter. Consequently, the electrical output signal of block 114 is proportional to the measured mass flow rate.

Since the maximum torsion angle of the measuring shaft of the torque transducer, the angle required to measure the maximum torque value, is very small (0.2° ... 0.6°) and the reduction ratio achieved by coupling the two wheels 100 and 101 and transmitted through the coupling between the wheels 100 and 101 provides for the de-multiplication of the rotation angle of the reaction tube 86, it results that the reaction tube 86 functionally requires a very low rotation angle corresponding to the entire Qₘᵢₙᵢₘ-Qₘₐₓᵢₘ measurement range. ,

Consequently, practically, this type of flowmeter is a flowmeter without moving parts.

A third embodiment of a without moving reaction flowmeter is that with measuring of the reaction force by the differential measurement of the pushing pressure produced by it (Figures 14, 15).

The measuring fluid enters the flowmeter through an inlet connexion 123 ending with a nozzle (bumped head) 124 which enters a nozzle (bumped head) 125 of a reaction tube 126.

The fluid then flows through the reaction tube 126 which is bent at the other end at 90° and ends with a convergent nozzle.

The fluid exiting the reaction tube 126 is taken up by an outlet connection 127 through which it is discharged from the flowmeter.

Outlet connection 127 is provided at its inlet with a large converging nozzle for taking out the fluid exiting the reaction tube 126, a nozzle made to not disturb the reaction tube 126 at its very low angular rotation.

Connections 123 and 127 are rigidly and sealed tighten to a flowmeter housing128 having collinear axes of symmetry on the same horizontal line.

The radial equidistance between the nozzle (bumped head) 124 of the inlet connection 123 and the nozzle (bumped head) 125 of the reaction tube 126 is made up constructively by two bosses 129 corresponding to the bumped head 125 of the reaction tube 126.

The bosses 129 are cylindrical and are placed vertically, up and down, around the vertical shaft 130.

In particular situations, the bosses 129 may be replaced by a continuous circular crown along the inner circumference of the bumped head 125.

The bosses 129, having a very small height and a small outside diameter, provide the minimizing the contact friction between the bumped head 124, related to the inlet connection 123 and the bumped head 125 related to the reaction tube 126.

The rigorous positioning of the reaction tube 126 relative to the inlet connexion 123 is ensured by the rigorous concentric positioning of the bumped heads 124 and 125, achieved by a vertical shaft 130.

The shaft 130 passes both through the two positioning circular holes with which the bumped head 125 of the reaction tube 126 is provided, the holes being disposed diametrically opposed in the vertical plane, as well as the two circular positioning holes with which the bumped head 124 of the inlet connection 123 is provided, holes placed in their turn, diametrically opposed and having centers on the same vertical plane with the two previous positioning holes.

The execution tolerances for the diameters of the two positioning holes of the bumped head 124 provide minimal play between the bumped head 124 and the vertical shaft 130.

In its turn, the vertical shaft 130 is stiffened with respect to a lower outer boss 131 of the reaction tube 126, respectively related to its bumped head 125, via a locking system screw 132 - nut 133. The boss 131 is cylindrical and placed in vertical plane.

The rigorous positioning in both the horizontal and vertical plane of the shaft 130 is accomplished by providing two holes (bearings) 134 and 135 for its passing through the upper and lower walls of a support 136 of the reaction tube 126. The centers of the two holes (bearings) 134 and 135 are rigorously located on the same vertical axis, and thus both minimal horizontal play and minimal friction of the shaft 130 are provided constructively.

The shaft 130 rests on a collar flange 137 which is stiffened both related to the support 136 by a screw 138 - nut 139 system and the housing 128 of the flowmeter by some screws 140.

In order to rigidize the reaction tube 126 with the shaft 130, the reaction tube 126 is provided at its inlet with two outer bosses 131 and 141 located in a vertical plane and diametrically opposed.

In an upper outer boss 141 at a distance Ls from the center of the shaft 130, a pin 142 is rigidly embedded which, by its hemispherical side, remains in permanent contact with a separation membrane 143 to which it permanently transmits the pushing force F_{S} of the reaction tube 126 as long as fluid flows through it and implicitly is generated by the reaction force F_{R}.

Since the L_{R} /L_{S} ratio of the F_{R} and F_{S} arm forces is constructively greater than 1, it results that the F_{S} force has an amplified value relative to the F_{R} reaction force value.

A pin 142 pushes a separation membrane 143 through a workpiece 144 which directly takes over the F_{S} force. The membrane 143 is tightly sealed between the part 144 and the nut 145 by fully screwing them. Thus, the membrane 143 takes over the F_{S} force.

The separation membrane 143 is rigidly tighten and sealed externally between flanges 146 and 147 which are fastened by a screws 148 nuts 149 system.

Consequently, on the side towards the measuring fluid, on the separation membrane 143 operates both the static pressure p_{f} of the measuring fluid and the pushing pressure of the pin 142, respectively

pₛ = F_{S} /Aₘ. (Aₘ being the area of the membrane's active surface) determined by the F_{S} pushing force.

A connection 150 is welded to the flange 146 which passes through a hole 151 provided in the side wall of the support 136 and is stiffened against this by completely screwing a nut 152. The connection 150 is rigidly and tightly mounted to the housing 128 and connected to the high pressure outlet (+) of a differential pressure sensor 154. By connection 150 is transmitted the pressure taken from the other side of the separation membrane 143.

The functional transmission of the pressure taken by the separation membrane 143 (i.e., the sum of the pressure pₛ determined by the pushing force F_{S} of the pin 142 and the static pressure p_{f} of the measuring fluid) to the sensor 154 is provided by a transmission liquid, with which is previously fully filled the volume between the separation membrane 143 and the sensing element of the sensor 154.

At the low pressure outlet 155 of the sensor 154, is coupled the static pressure p_{f} of the measuring fluid, taken by a connection 156 which is rigidly mounted and sealed relative to the housing 128.

Sensor 154 provides for a fully rigorous measurement of the differential pressure Δp, being structurally provided also with the function of compensating it with the temperature of the measuring fluid.

By measuring the difference of the two pressures, the sensor 154, actually measures the pressure pₛ, since Δp = (p_{f} + pₛ) -p_{f} =pₛ.

Thus, sensor 154 indirectly measures the pushing force Fs, implicitly the reaction force F_{R} (since, as previously described, pₛ = (L_{R} x Lₛ⁻¹ x Aₘ⁻¹) x F_{R} = k x F, where k= flowmeter constructive constant) and consequently measures the mass flow rate Qₘ. The output signal from the differential pressure sensor 154 is applied by a cable 157 to an electronic block 158.

In the electronic block 158 is stored previously, following experimental calibration on the checking installation of the flowmeter, its specific correspondence Δp = Δp (Qₘ), of the differential pressure measured by the sensor 154 and the mass flow Qm.

Thus results that the electrical output signal from the electronic block 158 renders the value of the measured mass flow Qₘ.

Since the pressure transmitting liquid from the separation membrane 143 to the pressure transducer 154 is practically incompressible, the displacement of the membrane 143, implicitly of the pin 142, is therefore particularly small, almost null, to measure the entire range Qₘᵢₙ ... Qₘₐₓ. Correspondingly, the displacement of the reaction tube 126 is extremely small.

Consequently, this type of flowmeter is practically a flowmeter without moving parts.

The advantages of the measuring method and the reaction flowmeter as the subject matters of this invention are:

-possibility offered by the reaction measurement method, to be implemented at both types in which are grouped the all flowmeters for closed conduits (with and without moving parts) respectively with or without displacement of the reaction tube, thus extending in a significant manner the industrial applicability field of the flowmeters made according to this invention;
- substantial simplicity of the configuration and, implicitly, the execution of the fluid flow path through the flowmeter, as compared with the already known flowmeters with moving parts, and additionally by eliminating the connected devices having a functional role on flow, used to generate and measure some parameters proportional to flow rate, related to already known flowmeters without moving parts;
- low pressure drops on the flowmeter, due to the simplicity of the flow path of the fluid through the device;
- elimination of electricity consumption caused by the operation of related devices;
- increasing the sensitivity of measurement due to a minimal functional friction in the single bearing of the mobile element, in the circumstances that both the friction force, proportional to the weight of the reaction tube and the radius of its shaft, have low values;
- extremely simple, compact, and reduced dimensional solution;
- low cost of the device and its related maintenance.

## Claims

1. A method of measuring the flow based on the action of a reaction force **characterized in that** implies processing the following steps:
- entering of fluid which flow rate Q = Axv is measured, in a fixed vertical tube necessary to provide a reference parameter by achieving a constant flow area value A and obtaining and identifying as a variable measuring parameter, the velocity v of the fluid;
- taking the fluid velocity v as a variable parameter and transforming it into a reaction force exerted by the fluid either on a horizontal mobile tube bent at 90° or on a horizontal mobile drum provided with tangential opposite outflow nozzles called reaction elements;
- sensing, as intermediate flow calculation parameters, proportional to the flow rate, either the angular displacement or the rotation frequency of the mobile horizontal tube or the mobile horizontal drum;
- taking the angular displacement by a force sensor or respectively the rotating frequency, by a proximity sensor;
- electronic processing of parameters in order to render the actual value of the measured flow.

2. A reaction flowmeter made according to the method of claim 1, **characterized in that** it is made up by the reference block BR realized by the fixed tube 2, vertically placed and cylindrically shaped, which is intended for accessing the measuring fluid, the Sensitive block BS of a specific construction and having a specific functionality, made as a mobile element horizontally positioned and having a discharging role, through which passes the flow rate of the measuring fluid, such that the mobile element is provided with an circular orifice in which the fixed circular vertical tube enters, the orifice allowing free rotation of the mobile horizontal element relative to the fixed vertical one, respectively to its symmetry axis, under the action of reaction force of the measured fluid, displacements which are taken up by the Secondary element ES which takes over and processes either the moment of rotation for the reaction flowmeters with angular displacement of the mobile tube, or as the case may be, the rotating frequency of the reaction element for the reaction flowmeters with the rotation of the mobile tube /drum, both proportional to the reaction force in its turn proportional to the measured flow rate.

3. A reaction flowmeter according to claim 2, **characterized in that** the Reference block BR made up of the fixed vertical tube 2, which freely enters the Sensitive block BS realized by the tube 1 which is closed at one end and open at the other end which is bent at 90°, and at the upper side has a circular orifice with a diameter slightly larger than the outer diameter of the tube 2, thus allowing it to rotate freely in the horizontal plane with respect to the fixed vertical tube 2, and the Secondary element ES is made having at the entrance a force sensor, which force is determined by the moment of magnetic resistance created by the force of attraction between the vertical magnet 8 inserted into the wall closing the tube 1 contained in the flowmeter vat10 and the annular magnet 11 located outside the vat so that the angular displacement in horizontal plane of the vertical magnet 8 determines the corresponding rotation of the annular magnet 11, which being rigidly mounted on the shaft 12 implicitly determines its rotation with the same angle, the shaft 12 by rotating in the bearings 13 causes the pointer 14, joint with the shaft 12 to rotate with the same angle, and being permanently in contact with the force sensor 15 which generates an electrical signal, proportional to the measured force Fm, signal transmitted through the cable 16, to the electronic block 17 for processing, calculation and rendering of the measured flow rate.

4. A reaction flowmeter according to claim 2, **characterized in that** it consists of the Reference block BR made up of the fixed vertical tube 25 which freely enters the Sensitive block BS realized by the tube 24 having the cross section of an ellipsoidal hydrodynamic shape relative to the direction of rotation , closed at one end and open at the other end, which is bent at 90° and at the upper side has an circular orifice with a slightly larger diameter than the outer one of the tube 25, thus allowing it to rotate freely in the horizontal plane , relative to the fixed vertical tube 25, the fluid exiting the tube 24 through the convergent nozzle placed at its extremity causing the reaction force F_{R} proportional to the measured flow rate Q, force acting on the tube 24 and determining the moment of reaction, respectively of rotation of the mobile tube 24, and the Secondary element ES realized by the proximity sensor 33 having the function an electrical contact placed on the cover 31, sensor controlled by the magnet 32 as its passing through the symmetry axis of the sensor 33, the magnet 32 being inserted into the closed end of the mobile tube 24 such that when the tube 24 is rotated, the magnet 32 approaches the sensor 33 , it controls the closure of its associated electrical contact, information transmitted by some electrical cables 34 to the final electronic block 35 of the ES , respectively the Block for processing, calculation and rendering of the measured flow rate Q, which functionality is based on the fact that the rotational speed of the mobile tube 24 is proportional to the measured flow rate Q, and consequently the frequency determined by the electronic block 35 for the pulses received from the sensor 33 is proportional to the measured flow rate Q.

5. A reaction flowmeter according to claim 2, **characterized in that** it is made up of the Reference block BR realized by the fixed vertical tube 42 which freely enters the Sensitive block BS realized by the mobile horizontal drum 41, centrally provided at the upper side with a circular orifice, with a slightly larger diameter than the outer one of the tube 42, thus allowing it to rotate freely in horizontal plane, relatively to the fixed vertical tube 42, the fluid exiting the drum 41 in opposing directions through the nozzles 43 and 44 located diametrically opposed and tangentially to its outer contour, causing the occurrence of two opposite reaction forces, each of them with its own reaction moment which sums up the rotation effects of the drum 41 proportionally to the measured flow rate Q, and the Secondary element ES realized by the proximity sensor 52 placed on the cap 50 and having the functionality of an electrical contact, a sensor that closes its electrical contact controlled by the magnet 51 when passes the axis of symmetry of the sensor 52, the magnet 51 being inserted at the upper side of the mobile drum 41, this information being transmitted to the electronic block 54, as the final block of the ES, respectively, the Block for processing, calculation and rendering the measured flow rate Q, which functionality is based on the fact that the rotation speed of the mobile tube 24 is proportional to the measured flow rate Q, and consequently the frequency determined by the electronic block 54 for the pulses received from the sensor 52 is proportional to the measured flow rate Q.

6. A reaction flowmeter according to the method of claim 1, **characterized in that** it is without moving parts and is made up of the reference block BR realized by the fixed tube 58 or 83, or respectively 123 as the case may be, horizontally positioned and cylindrically shaped, for the access of the measuring fluid, the Sensitive block BS of a specific construction and having a specific functionality and realized in the form of a curved quasi-immobile tube having the role of the reaction element without moving parts, 59 or respectively 86 or 126,as the case may be, so that under the action of the reaction force of the measuring fluid, are produced signals either by the nature of a moment or of a differential pressure, as the case may be, proportional to the reaction force in its turn proportional to the measured flow rate, taken by the Secondary element ES realized as a torque sensor 69 or 114,or respectively of differential pressure sensor 154, as the case may be, and processed in the electronic block for processing, computing and rendering of the actual measured flow rate.

7. A reaction flowmeter according to claim 6, **characterized in that** the measuring fluid enters the flowmeter by the inlet connection 58 and continues its flow through the reaction tube 59, passing through the spherical coupling made of the nozzle 60 and respectively the nozzle 61 in the form of bumped heads, the reaction tube 59 bent at the other end by 90°, the fluid in the reaction tube 59 being taken up by the outlet connection 62 through which it is discharged from the flowmeter, and the connections 58 and 62 are rigidly and sealed to the housing 63 of the flowmeter, having collinear axes of symmetry on the same horizontal line, so that the system of mechanical components properly structured and calibrated made by the bosses 64 and the vertical shaft 65, ensures a rigorous concentric positioning of the two bumped heads 60 and 61 which provide the rigorous positioning of the reaction tube 59 with respect to the inlet connection 58, and by wedge 67, the measuring shaft 68 of the torque transduce 69 fully takes over the rotating torque of the tube 59 through the measuring shaft 68 and implicitly by the torque transducer 69 which electrical signal output, proportional to the measured mass flow rate, is taken over by the electronic block 78 for processing, calculating, and rendering the actual measured flow rate, which, in order to compensate for the temperature effect of the measured fluid, also receives a signal from the temperature sensor 81.

8. A reaction flowmeter according to claim 6, **characterized in that** the measuring fluid enters the flowmeter through the inlet connection 83 and flows through nozzles 84 and 85, both nozzles having the shape of a bumped head, the reaction tube 86 bent at the other end at 90° and, respectively, the output outlet 87, through which it is discharged from the flowmeter so that the connections 83 and 87 are tighten rigidly and sealed to case 88 of the flowmeter, having the symmetry axes collinear on the same horizontal line, so that the system of mechanical components properly structured and calibrated made up of the bosses 89, related to the bumped head 85 of the reaction tube 86 and the vertical shaft 90, ensures the rigorous positioning of the reaction tube 86 with respect to the inlet connection 83 by rigorously concentric positioning of the bumped heads 84 and 85 and by the driving wheel 100 coupled by friction with the driven wheel 101, provides a gear ratio which ensures the corresponding multiplication of the rotation angle of the driven wheel 101 with respect to the very small rotation angle of the driving wheel 100 such that on the shaft 102 of the driven wheel 101 is rigidly placed the circular magnet 103 immersed in the measuring fluid and a mechanical bearings system allows the rotation of the wheel 101 to be reproduced and by magnetic coupling, rotation of the magnet 112 rigidly fixed on the measuring shaft 113 of the torque transducer 114, and the output signal of the torque transducer 114 is transmitted to the electronic block 120 for processing, counting and rendering of the measured flow rate which, in order to compensate for the effect of the ambient temperature of the transducer 114, also receives a signal from the temperature sensor 121.

9. A reaction flowmeter according to claim 6, **characterized in that** the measuring fluid enters the flowmeter through the inlet connection 123 ended with the nozzle 124 and then passes the nozzle 125 related to the reaction tube 126, both nozzles having the shape of a bumped head, and the tube reaction 126, bent at the other end at 90° and ended by a convergent nozzle, and then taken up by the outlet connection 127, the connections 123 and 127 being rigidly fastened and sealed to the flowmeter housing 128, having the symmetry axes collinear on the same horizontal line, so that by the system of mechanical components, properly structured and calibrated, made up by the bosses 129 and the vertical shaft 130, a rigorous positioning of the reaction tube 126 relative to the inlet connection 123 is achieved by the rigorous concentric positioning of the bumped heads 124 and 125, and a system of mechanical components properly structured and calibrated, assures a permanent contact with the separation membrane 143 to which it permanently conveys the pushing force F_{S} from the reaction tube 126 upon the fluid flow, and through the connection 150 is transmitted the pressure taken up from the other side of the separation membrane 143 so that the functional transfer of the pressure taken up by the separation membrane 143 towards the sensor 154, is provided by a transmission liquid which previously is fully filled the volume between the separation membrane 143 and sensing element of the differential pressure sensor 154, compensated by temperature, and the output signal from the sensor enters the electronic block 158 for processing, calculation and rendering the actual measured flow rate.
